# FASCICULE DE BREVET EUROPEEN

(11) **EP 0 468 904 B1**
(45) Date de publication et mention de la délivrance du brevet: **23.11.1994**
(21) Numéro de dépôt: 91420270.0
(22) Date de dépôt: 23.07.1991
(51) Int. Cl.: B32B 5/28, B32B 9/04, B32B 31/20, C04B 35/52, C04B 35/54, B01D 61/36, F28F 3/00, F28F 21/02

(54) **Procédé de fabrication de pièces étanches en matériau composite tout carbone**
Verfahren zur Herstellung von dichten Teilen aus Kohleverbundwerkstoff
Method for making impervious pieces of carbon composite material

(30) Priorité: 26.07.1990 FR 9009803
(43) Date de publication de la demande: 29.01.1992
(73) Titulaire: LE CARBONE LORRAINE, 92400 Courbevoie (FR)
(72) Inventeur: Bauer, Jean-Michel, F-54530 Pagny S/Moselle (FR); Bontems, Maurice, F-54530 Pagny S/Moselle (FR)
(74) Mandataire: Séraphin, Léon

(56) Documents cités:
- EP-A- 0 231 787
- FR-A- 2 411 703
- GB-A- 2 169 273
- GB-A- 2 205 906
- US-A- 4 522 895

## Description

L'invention concerne le domaine des matériaux multicouches comportant des couches de matériaux composites carbone - carbone (C-C en abrégé) et des couches de graphite expansé (GE en abrégé).

Les matériaux constitués de couches de composites C-C et de couches de GE sont connus. Cette association de matériaux est du plus grand intérêt : la couche de composite C-C, constituée d'un substrat fibreux de fibre de carbone et d'une matrice carbonée, apporte des caractéristiques mécaniques élevées alors que la couche de GE apporte l'étanchéité, la souplesse. En ce qui concerne la fabrication de ces matériaux ou d'articles constitués de ces matériaux, il est particulièrement avantageux de les obtenir à partir de bandes ou de feuilles de GE du commerce plutôt que par des techniques de moulage à partir de particules de GE (les bandes ou feuilles de GE du commerce sont obtenues par compression de particules de GE et ont une densité de l'ordre de 1).

Ainsi, dans le document GB 2 205 906, est décrit un joint constitué d'une couche centrale en composite C-C entre deux couches de GE. Le fabrication de ce joint comporte le pressage à chaud de l'empilage suivant : couche de GE / substrat de fibres de carbone imprégné de résine / couche de GE qui conduit à un matériau multicouche que l'on peut désigner symboliquement par GE/C-C/GE. De même dans le document EP 231 787 est décrit un procédé de fabrication de tubes par bobinage de filés de fibres de carbone imprégnés de résine avec introduction, au cours du bobinage, d'une feuille de GE destinée à conférer l'étanchéité. Après cuisson et carbonisation de la résine, on obtient un matériau multicouche du type C-C/GE/C-C. Enfin, dans le brevet japonais JP 85-247680, on décrit un procédé dans lequel on comprime simultanément des couches alternées de GE et de substrat fibreux imprégné de résine. Après cuisson et carbonisation de la résine, un matériau multicouches est obtenu (exemples avec 3 et 7 couches).

La demanderesse a observé que, dans certains cas, les matériaux multicouches obtenus à partir d'un empilage de couche de GE et de couche de C-C n'étaient pas étanches, plus précisément lorsque la mise en forme du matériau multicouche conduisait à une déformation sévère, par exemple dans le cas de pièces ayant des parties s'écartant notablement du plan moyen de la pièce ou présentant de petits rayons de courbure.

Un objet de l'invention est un procédé permettant de fabriquer des pièces étanches en matériau multicouches de type C-C/GE et de niveau de déformation élevé.

Un autre objet de l'invention est d'obtenir des pièces auto-assemblables dans les dispositifs faisant appel à l'assemblage de pièces identiques, telles que les plaques d'échangeurs de chaleur ou de modules de filtration. Par pièces auto-assemblables, on entend des pièces que l'on peut assembler par simple pression sans faire appel à d'autres matières ou moyens pour assurer l'étanchéité entre les pièces (joints, adhésifs, etc...), ce qui présente un grand intérêt en pratique.

Un autre objet est un procédé de fabrication économique de pièces étanches à niveau de déformation élevée et/ou auto-assemblables, ce qui permet d'obtenir des assemblages économiques de ces pièces résistant à la corrosion et stables thermiquement.

### DESCRIPTION DE L'INVENTION

Selon l'invention, le procédé de fabrication de pièces composites (1) en carbone, de grande surface par rapport à l'épaisseur, présentant un bord (2) et une partie centrale (3), comprenant au moins une couche de composite carbone/carbone (4) et au moins une couche de graphite expansé recomprimé (5), le dit procédé comportant l'empilage et la compression d'au moins une couche de préimprégné (6) à base de nappe de fibre de carbone imprégnée de résine, et d'au moins une couche de graphite expansé (7a), suivie d'une cuisson et d' un traitement thermique à haute température, **caractérisé en ce que**, dans le but d'obtenir une pièce composite (1) en carbone étanche, avec une partie centrale (3) présentant un niveau de déformation élevé et avec un bord (2) permettant l'auto-assemblage de ladite pièce, l'expression "niveau de deformation élevé" signifiant soit q'une portion de la partie centrale (3) est éloignée du plan moyen (11), plan qui peut se confondre, mais pas nécessairement avec le plan du bord (2) ou son plan moyen en cas de bord non-plan, soit que la partie centrale comporte des portions à courbure élevée.
a) on prépare un empilement (8) d'au moins une couche de préimprégné (6) comportant une nappe, éventuellement déformable, à base de fibre de carbone ou de précurseur de fibres de carbone, de surface au moins égale à celle de la partie centrale, et d'au moins une couche de graphite expansé (7a) de densité comprise entre 0,03 et 0,06, de surface au moins égale à la surface de la projection de ladite pièce sur le plan moyen (11),
b) on comprime l'empilement (8) entre un poinçon (9) et une matrice (10) d'une presse sous une pression comprise entre 2,5 et 15 MPa et à une température comprise entre 50 et 200°C, de manière à comprimer davantage la partie centrale (3) que le bord (2), grâce à une distance entre poinçon et matrice plus faible au niveau de la partie centrale qu'au niveau de bord et éventuellement grâce à un empilement d'épaisseur plus grande au niveau de la partie centrale qu'au niveau du bord, et à obtenir une densité de graphite expansé comprise entre 0'3 et 0'6 pour le bord et entre 1 et 1'5 pour la partie centrale.
c) on traite thermiquement la pièce comprimée à une température comprise entre 400 et 3000°C

Par niveau de déformation élevé, on signifie soit qu'une portion de la partie centrale (3) est éloignée du plan moyen (11), plan qui peut se confondre, mais pas nécessairement avec le plan du bord (2) ou son plan moyen en cas de bord non-plan, soit que la partie centrale comporte des portions à courbure élevée.
Quantitativement, on considère qu'une portion de la partie centrale est éloignée du plan moyen si le rapport entre la distance "d" entre ladite portion et le plan moyen et l'épaisseur "e" est supérieure à 1,5 (d/e > 1,5). De même, par courbure élevée, on entend un rayon de courbure inférieur à 5 cm.
Ces valeurs de déformation constituent une frontière entre deux domaines, celui à faible déformation pour lequel les procédés de l'art antérieur sont utilisables et permettent d'obtenir des pièces étanches et celui à déformation élevée pour lequel seule l'invention permet d'obtenir des pièces étanches. Cette frontière est relative et signifie seulement que l'art antérieur ne permet pas de produire de pièces, à niveau de déformation élevé, étanches, avec un taux de pièces rebutées pour défaut d'étanchéité acceptable en pratique industrielle, l'étanchéité des pièces étant un facteur particulièrement critique dans les applications envisagées selon l'invention.

La demanderesse a étudié les facteurs pouvant influencer l'étanchéité d'une pièce composite de structure typique à 3 couches symbolisée par C-C/GE/C-C et a observé que les nappes de GE habituellement utilisées et de densité voisine de 1 ne convenaient pas et que le facteur prépondérant était la densité du GE lors de la mise en forme.
La demanderesse a préparé une série de bandes de GE variant par la densité et a observé qu'il y avait deux limites à respecter : au-delà de la limite de densité supérieure (0,06) l'étanchéité de la pièce diminue et l'on se rapproche de l'art antérieur, en deçà (0,03), la tenue et la manipulabilité de la bande de GE diminue, son volume massique augmente, ce qui rend la pratique industrielle trop difficile. En effet, industriellement, il est commode d'utiliser le GE sous forme de bande, continue ou non, facile à manipuler de manière à pouvoir utiliser une mise en forme de type "emboutissage" utilisant des nappes bidimentionnelles plutôt qu'une mise en forme de type "moulage" utilisant des matériaux en vrac, et de manière à pouvoir automatiser la fabrication de pièces composite et/ou fabriquer des pièces en continu.
La demanderesse a émis l'hypothèse que la mise en forme d'une bande de GE de "haute densité" pouvait conduire, dans le cas d'une déformation élevée, à un fendillement de la bande entraînant une diminution de l'étanchéité.

Par ailleurs, la demanderesse a trouvé que l'emploi de GE de faible densité permettait aussi d'obtenir des pièces auto-assemblables en jouant notamment sur des différences de densité du GE et d'épaisseur entre le bord (2) et la partie centrale (3). En particulier, il est avantageux d'avoir simultanément un bord plus épais que la partie centrale et une densité de GE plus faible pour le bord que pour la partie centrale, de manière à avoir un bord possédant une possibilité de compression résiduelle sous pression modérée qui permet d'obtenir, lors d'un assemblage de pièces, l'étanchéité entre elles. La différence d'épaisseur entre bord et partie centrale de la pièce est obtenu, de manière immédiate, en jouant sur un écartement variable entre poinçon et matrice. Il est avantageux d'avoir une densité de GE comprise entre 1 et 1,5 pour la partie centrale (3), ce qui assure une bonne étanchéité perpendiculairement à la pièce, et comprise entre 0,3 et 0,6 pour le bord, ce qui assure une bonne étanchéité tangentiellement à la pièce (étanchéité entre le bord d'une pièce et le bord d'une pièce adjacente dans un assemblage de pièces).

Pour fabriquer des pièces présentant une partie centrale à niveau de déformation élevé, il importe selon l'invention d'utiliser un préimprégné constitué d'une nappe déformable de matériau carboné, et donc de préférence, des nappes obtenues soit à partir de fibres courtes, soit à partir de fibres orientées aléatoirement, ou encore des nappes à tissage relativement "lâche". Des nappes de satin à fibres courtes, des nappes de feutre ou de mat conviennent selon l'invention. Dans le cas de pièces à faible niveau de déformation, un substrat plus rigide, par exemple tridimensionnel peut convenir également. Les substrats ou nappes utilisés ont un grammage compris entre 100 et 500 g/m².La teneur en résine du préimprégné est généralement comprise entre 15 et 35% en poids.

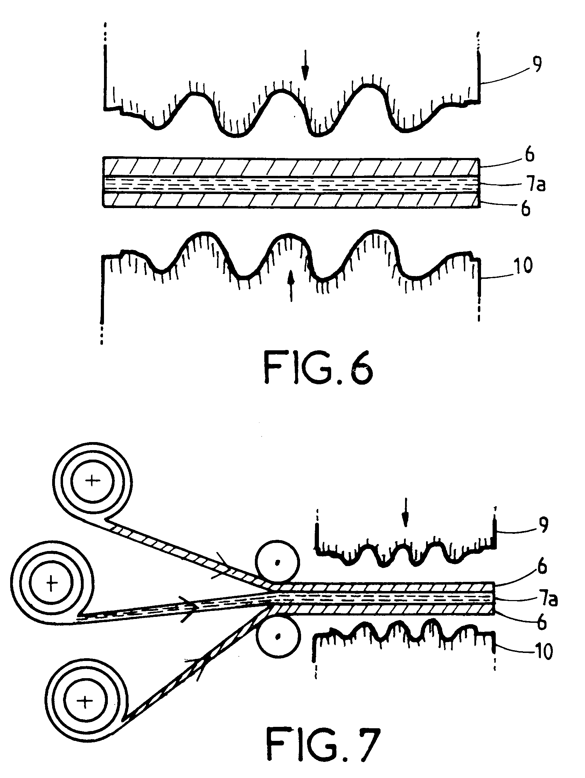

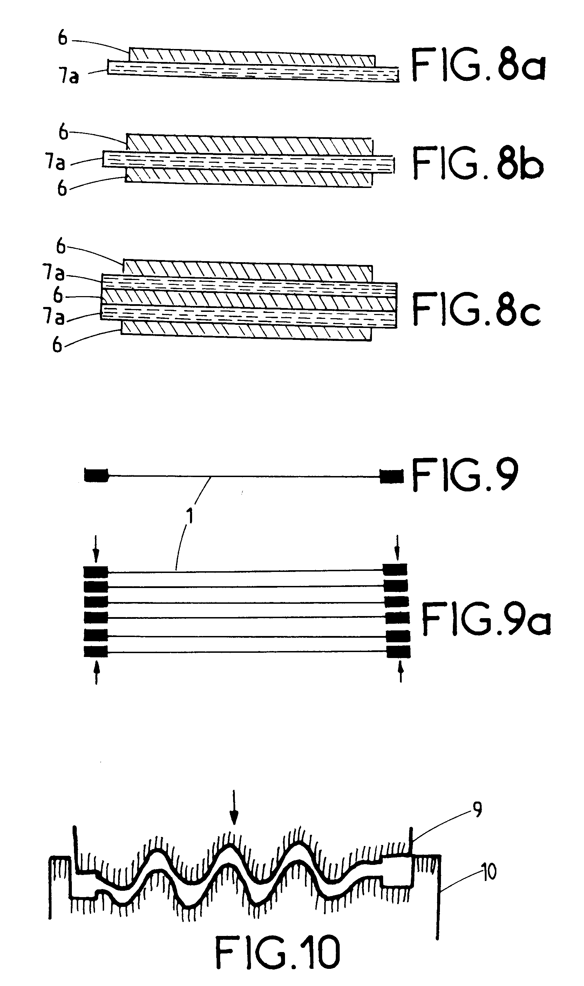

Selon une première modalité de l'invention, on empile des couches de préimprégnés constitue d'une nappe de fibre de carbone ou de précurseur de fibre de carbone, déformable, imprégné de résine et des couches de GE ayant une densité comprise entre 0,03 et 0,06. Les empilements typiques les plus simples sont, avec la représentation symbolique déjà utilisée, C-C/GE, C-C/GE/C-C, GE/C-C/GE, mais cette liste n'est pas limitative. Il est commode de réaliser un empilement à partir de bobines, juste en amont de la presse de mise en forme, comme ilustré à la figure 7, et dans ce cas, l'empilement formé alimente une presse comme schématisé aux figures 8 a - d.
On peut aussi, de manière connue, découper des portions de bande de préimprégné et de GE sensiblement aux dimensions de la pièce à obtenir, les empiler et les mettre en forme à la presse (voir figure 6).

Selon une seconde modalité de l'invention, au moins une des couches de préimprégné s'étend sur seulement une fraction de la surface de la pièce, et plus particulièrement s'étend sur la partie centrale (3) de la pièce, de sorte que l'empilement initial avant compression et chauffage peut être schématisé comme indiqué aux figures 8 a à c.
En jouant sur l'écartement différentiel entre poinçon et matrice et sur la différence de surface des couches de préimprégné et de GE, on obtient des pièces dont le bord, au moins aussi épais que la partie centrale, comprend un GE de densité comprise entre 0,3 et 0,6, alors que le GE de la partie centrale a une densité comprise entre 1 et 1,5.

L'étanchéité d'un assemblage de pièces selon l'invention sera facilitée si au moins une couche externe de la partie périphérique est une couche de GE, mais de préférence, les deux couches externes de la partie périphérique sont en GE de densité comprise entre 0,3 et 0,6.
L'invention comprend aussi des pièces auto-assemblables dont la partie centrale est plane et dont la partie périphérique est plus épaisse que la partie centrale avec des couches externes de GE ayant une densité comprise entre 0,3 et 0,6, comme représenté aux figures 9a et 9b.

Quelle que soit la modalité ou la variante de procédé, on obtient après mise en forme à la presse chauffante une pièce ayant la forme recherchée et rigide suite à la compression et à la polymérisation plus ou moins complète de la résine de préimprégnation, pièce qui est traitée de manière connue en elle-même entre 400 et 3000°C. Ce traitement transforme la couche de préimprégné polymérisé en matériau composite C-C relativement poreux, de là la nécessité d'une couche ininterrompue de GE pour assurer l'étanchéité.

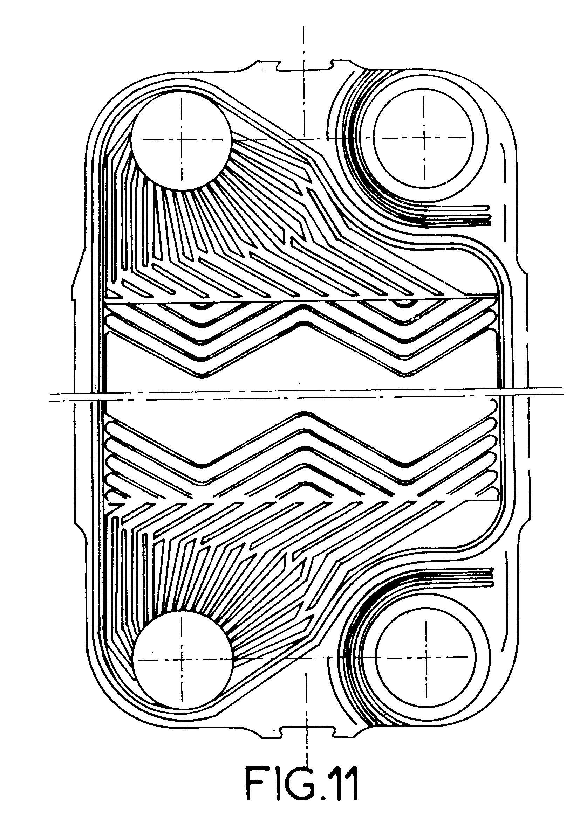

La pièce obtenue selon l'invention pourra être usinée selon son application finale, mais il peut être intéressant de n'avoir pas à usiner la partie périphérique en utilisant une presse avec poinçon et matrice telle que schématisée à la figure 10 de manière à obtenir à la presse les cotes définitives.

L'invention permet d'élargir l'emploi des matériaux multicouches C-C/GE à des pièces ayant un niveau de déformation élevé dans des domaines d'application où il est important de développer une grande surface sous un faible volume, tels que l'échange thermique et la filtration.

L'invention permet surtout d'obtenir des pièces présentant l'avantage de pouvoir être auto-assemblées sans nécessiter d'apport de matière ou dispositif complémentaire tel qu'un adhésif ou un joint.

Il convient de noter que les pièces selon l'invention présentent des propriétés adaptées à ces applications avec une conductibilité thermique (λ/e), perpendiculairement à leur plan local, comprise entre 5000 et 10000 kcal/h.m.°C, et une étanchéité comprise entre 10⁻⁸ et 10⁻⁶ cm²/s, ce qui permet d'obtenir des pièces de faible épaisseur ayant cependant de propriétés mécaniques élevées pouvant remplacer avantageusement sur le plan de la tenue à la corrosion les plaques inox par exemple dans les échangeurs à plaques et dans les modules de pervaporation.

### DESCRIPTION DES FIGURES

Toutes les figures se réferent à l'invention.

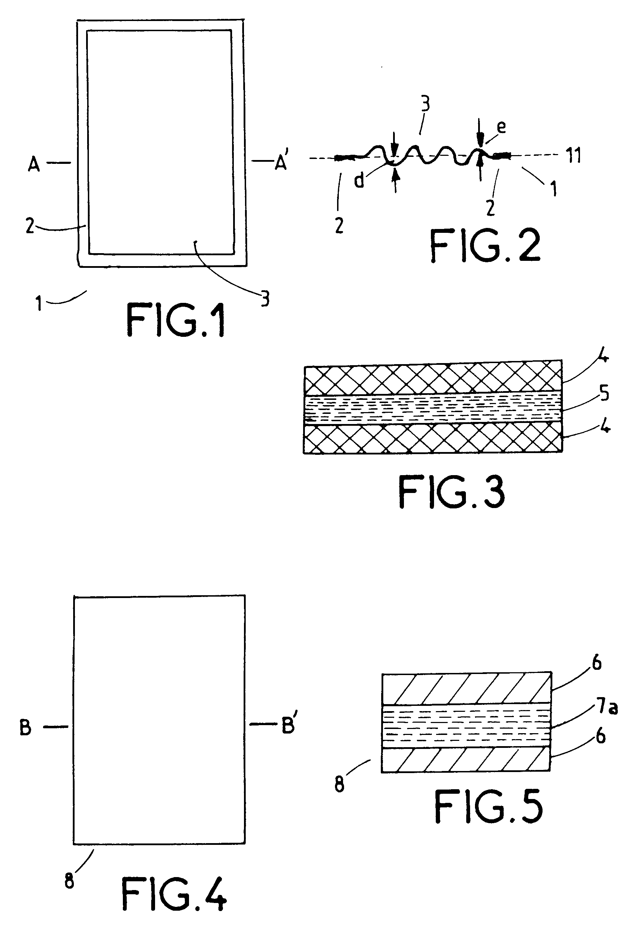

La figure 1 schématise une vue de dessus d'une pièce (1) obtenue selon l'invention, comportant un bord ou partie périphérique (2) et une partie centrale (3).

La figure 2 est une coupe transversale selon le plan AA' perpendiculaire au plan moyen (11) de la pièce. "e" désigne l'épaisseur de la pièce dans sa partie centrale et "d" désigne la distance entre le plan moyen (11) et les parties de la pièce les plus éloignées de ce plan moyen.

La figure 3 schématise, en coupe transversale, la structure d'un empilement de matériaux C-C(4)/GE(5)/C-C(4) d'une pièce obtenue selon l'invention.

Les figures 4 et 5 schématisent un empilement de couches de préimprégné (6) et de GE de faible densité selon l'invention (7a), les couches ayant sensiblement la même surface. La figure 4 est une vue de dessus, la figure 5 une vue en coupe selon le plan BB' perpendiculaire au plan formé par les couches.

La figure 6 schématise, en coupe perpendiculaire au plan des couches constituant l'empilement, une portion d'empilement de surface sensiblement égale à celle de la pièce à obtenir, entre poinçon et matrice d'une presse munie de moyens de chauffage (non-représentés).

La figure 7 schématise l'alimentation d'une presse à partir de 3 bobines de matériaux de départ.

Les figures 8a à 8c schématisent des empilements, en coupe perpendiculairement au plan des couches, dans lequel au moins une couche de préimprégné (6) a une surface réduite, seulement la surface de la partie centrale, alors que toutes les couches de GE (7a) s'étendent sur la surface totale.

La figure 9a schématise une pièce à partie centrale plane et la figure 9b schématise un assemblage de ces pièces.

La figure 10 schématise en coupe une presse dont le poinçon s'emboite parfaitement dans la matrice de manière à obtenir une pièce aux cotes finales.

La figure 11 est une photo d'une plaque d'échangeur de chaleur obtenue selon l'exemple 1 de l'invention.

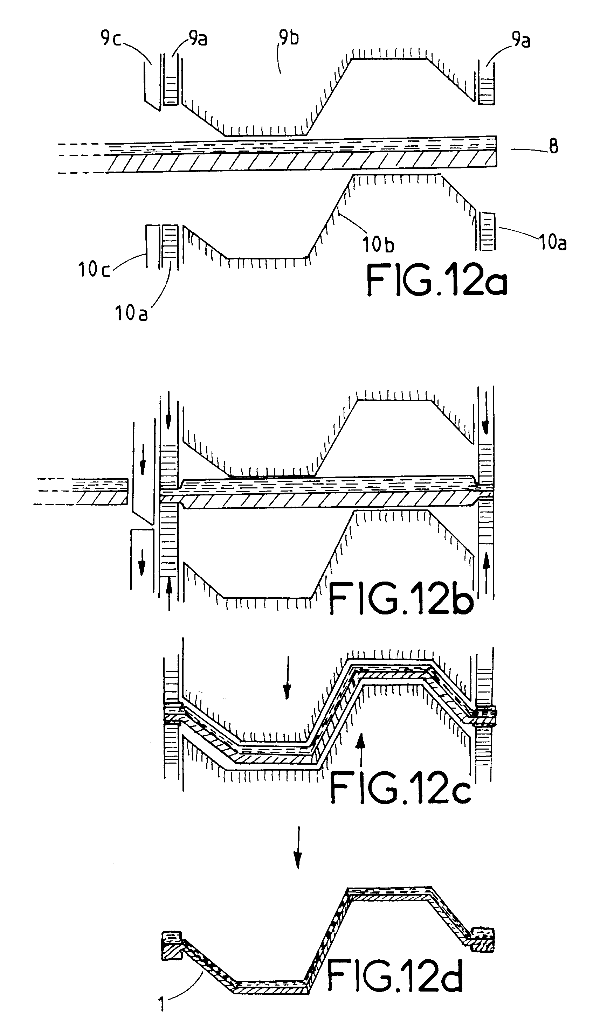

Les figures 12a à 12d illustrent une mise en forme à la presse alimentée en empilement (8) sous forme de bande continue, et munie de moyens (9a et 10a) pour bloquer l'empilement, de moyens de mise en forme (9a et 9b), de moyens pour découper l'empilement (9c et 10c).

### EXEMPLES

### Exemple 1

On a fabriqué des plaques d'échangeur de chaleur (voir photo à la figure 11).
Pour cela, on a découpé des portions (de dimensions 750 x 200 mm) de préimprégné et de GE.
Le préimprégné est un satin à fibre courte de carbone ayant un grammage de 300 g/m² et une teneur volumique en résine phénolique de 60 %.
Le GE a une densité de 0,05 et se présente sous forme d'une nappe de 20 mm d'épaisseur.

On a préparé un empilement comportant deux couches extérieures de préimprégné et une couche centrale de GE, que l'on peut désigner symboliquement par C-C/GE/C-C.
On a placé cet empilement entre le poinçon et la matrice d'une presse s'emboitant parfaitement comme schématisé à la figure 10 et ayant le relief indiqué à la figure 11 . On l'a soumis à une pression de 8 MPa de manière à obtenir une épaisseur de 1,5 mm et porté à 125 °C pendant 15 mn. On a ensuite porté la plaque ainsi obtenue à 1100°C, sous atmosphère neutre, pour cokéfier la résine du préimprégné. On obtient une plaque entièrement en carbone présentant des chevrons formant des ondulations :
- distance entre deux sommets : 13 mm
- niveau de déformation : d/e = 2
La plaque obtenue est étanche. Plusieurs plaques ainsi obtenues ont été montées à l'aides des dispositifs classiques pour former un échangeur qui a donné totale satisfaction.

### Exemple 2

On a fabriqué des plaques planes (500 mm x 500 mm) destinées à la construction d' un module de pervaporation selon le procédé décrit à l'exemple 1 sauf en ce que :
- on a utilisé un préimprégné dont le substrat est un sergé à longue libres de carbone à 250 g/m² imprégné de résine phénolique (60% en volume). Ce préimprégné a été découpé en carrés de 490 x 490 mm.
- on a utilisé du GE de densité 0,05 et d'épaisseur 10 mm que l'on a découpé en carrés de 500 x 500 mm.
- on a intercalé un carré de préimprégné entre deux carrés de GE pour obtenir un empilement de type GE/C-C/GE, avec le carré de préimprégné centré à 5 mm des bords des plaques de GE.
- on a mis cet empilement dans un moule chauffant composé d'une matrice et d'un poinçon dont les profils assurent, après compression, la fabrication d'une pièce ayant un bord de 2,5 mm d'épaisseur et une partie centrale de 1,5 mm d'épaisseur
- on obtient finalement une plaque toute en carbone, étanche, comportant un bord en graphite souple étanche de densité 0,4, utilisable dans un module de pervaporation et donnant entière satisfaction.

## Revendications

1. Procédé de fabrication de pièces composites (1) en carbone, de grande surface par rapport à l'épaisseur, présentant un bord (2) et une partie centrale (3), comprenant au moins une couche de composite carbone/carbone (4) et au moins une couche de graphite expansé recomprimé (5), le dit procédé comportant l'empilage et la compression d'au moins une couche de préimprégné (6) à base de nappe de fibre de carbone imprégnée de résine carbonisable, et d'au moins une couche de graphite expansé (7a), suivie d'une cuisson et d'un traitement thermique à haute température, **caractérisé en ce que**, dans le but d'obtenir une pièce composite (1) en carbone étanche, avec une partie centrale (3) présentant un niveau de déformation élevé et avec un bord (2) permettant l'auto-assemblage de ladite pièce, l'expression "niveau de déformation élevé" signifiant soit qu'une portion de la partie centrale (3) est éloignée du plan moyen (11), plan qui peut se confondre, mais pas nécessairement avec le plan du bord (2) ou son plan moyen en cas de bord non-plan, soit que la partie centrale comporte des portions à courbure élevée.
a) on prépare un empilement (8) d'au moins une couche de préimprégné (6) comportant un nappe, éventuellement déformable, à base de fibre de carbone ou de précurseur de fibres de carbone, de surface au moins égale à celle de la partie centrale, et d'au moins une couche de graphite expansé (7a) de densité comprise entre 0,03 et 0,06, de surface au moins égale à la surface de la projection de ladite pièce sur le plan moyen (11),
b) on comprime l'empilement (8) entre un poinçon (9) et une matrice (10) d'une presse sous une pression comprise entre 2,5 et 15 MPa et à une température comprise entre 50 et 200°C, de manière à comprimer davantage la partie centrale (3) que le bord (2), grâce à une distance entre poinçon et matrice plus faible au niveau de la partie centrale qu'au niveau du bord et éventuellement grâce à un empilement d'épaisseur plus grande au niveau de la partie centrale qu'au niveau du bord, et à obtenir une densité de graphite expansé comprise entre 0,3 et 0,6 pour le bord et entre 1 et 1,5 pour la partie centrale.
c) on traite thermiquement la pièce comprimée à une température comprise entre 400 et 3000°C

2. Procédé selon la revendication 1 dans lequel au moins une couche de prépreg (6) s'étend seulement sur la partie correspondant à la partie centrale (3) de ladite pièce.

3. Procédé selon une quelconque des revendications 1 à 2 dans lequel, afin de fabriquer une pièce à partie centrale à niveau de déformation élevé, on utilise un préimprégné (6) obtenu à partir de substrat déformable à base de fibres de carbone ou précurseur de fibres de carbone, choisi parmi les tissus à fibres courtes, les feutres, les mats.

4. Procédé selon une quelconque des revendications 1 à 2 dans lequel, afin de fabriquer une pièce à partie centrale à faible niveau de déformation, on utilise un préimprégné (6) obtenu à partir de substrat à base de fibres de carbone ou de précurseur de fibres de carbone, déformable ou non déformable tel qu'un substrat tridimensionnel.

5. Procédé selon une quelconque des revendications 1 à 4 dans lequel le préimprégné (6) est obtenu à partir de substrat carboné ayant un grammage par m² compris entre 100 et 500 g/m².

6. Procédé selon une quelconque des revendications 1 à 5 dans lequel l'empilement (8) est choisi parmi les empilements C/G, C/G/C, G/C/G dans lesquels C représente une ou plusieurs couches de prépreg (6) chacune ayant une surface au moins égale à celle de la partie centrale (3) de la pièce, et G représente une couche de graphite expansé (7a) de densité comprise entre 0,03 et 0,06.

7. Procédé selon une quelconque des revendications 1 à 6 dans lequel on utilise une presse pour comprimer l'empilement (8) comportant des moyens annulaires (9a et 10a) permettant de bloquer la périphérie de l'empilement (8), des moyens (9c et 10c) permettant le découpage de l'empilement (8) aux dimensions de la pièce (1) à obtenir, des moyens (9b et 10b) permettant de réaliser la compression et la déformation éventuelle de la pièce.

8. Pièce composite tout en carbone auto-assemblable obtenue selon une quelconque des revendications 1 à 7 caractérisée en ce qu'elle a le bord (2) entourant la partie centrale (3) d'une épaisseur au moins égale à celle de la partie centrale, et en ce que le graphite expansé a une densité comprise entre 0,3 et 0,6 pour le bord et entre 1 et 1,5 pour la partie centrale.

9. Pièce composite selon la revendication 8 dans laquelle l'empilement correspondant au bord (2) comporte au moins une face externe en graphite expanse.

10. Pièce composite selon une quelconque des revendications 8 et 9 dans laquelle la partie centrale a un niveau de déformation élevé avec localement un rapport d/e supérieur à 1,5.

11. Application des pièces composites obtenues selon une quelconque des revendications 8 à 10 comme plaques d'échangeur de chaleur et comme plaques de séparation dans des modules de filtration.

## Claims

1. Process for producing carbon composite components (1) of a large area in relation to the thickness and having an edge (2) and a central part (3), comprising at least one layer of recompressed expanded graphite (5), the said process involving the stacking and compression of at least one layer of preimpregnate (6) based on a carbon-fibre lap impregnated with carbonizable resin and of at least one layer of expanded graphite (7a), followed by a curing and a thermal treatment at high temperature, characterised in that, in order to obtain a sealing carbon composite component (1) with a central part (3) having a high deformation level and/or with an edge (2) allowing the self-assembly of the said component, the expression "high deformation level" denoting either that a portion of the central part (3) is distant from the mid-plane (11) which can, but does not necessarily, coincide with the plane of the edge (2) or its mid-plane in the event of a non-plane edge or that the central part has portions of high curvature,
a) there is prepared a stack (8) of at least one layer of preimpregnate (6) comprising a sheet if appropriate deformable, based on carbon fibre or a precursor of carbon fibres, of an area at least equal to that of the central part, and of at least one layer of expanded graphite (7a) of a density of between 0.03 and 0.06 and of an area at least equal to the area of the projection of the said component on the mid-plane (11),
b) the stack (8) is compressed between a punch (9) and a die (10) of a press under a pressure of between 2.5 and 15 MPa and at a temperature of between 50 and 200°C so as to compress the central part (3) more than the edge (2) by means of a distance between punch and die which is smaller in the region of the central part than in the region of the edge and optionally by means of a stack having a greater thickness in the region of the central part than in the region of the edge, and to obtain a density of the expanded graphite of between 0.3 to 0.6 for the edge and between 1 and 1.5 for the central part,
c) the compressed component is treated thermally at a temperature of between 400 and 3000°C.

2. Process according to claim 1, wherein at least one layer of preimpregnate (6) extends only over the part corresponding to the central part (3) of the said component.

3. Process according to any of claims 1 to 2, wherein, in order to produce a component with a central part of high deformation level, there is used a preimpregnate (6) obtained from a deformable substrate based on carbon fibres or a precursor of carbon fibres and selected from short-fibre fabrics, felt and mats.

4. Process according to any one of claims 1 to 2, wherein, in order to produce a component with a central part of low deformation level, there is used a preimpregnate (6) obtained from a substrate based on carbon fibres or a precursor of carbon fibres and deformable or non-deformable, such as a three-dimensional substrate.

5. Process according to any one of claims 1 to 4, wherein the preimpregnate (6) is obtained from a carbon-containing substrate having a gsm value of between 100 and 500 g/m².

6. Process according to any one of claims 1 to 5, wherein the stack (8) is selected from the stacks C/G, C/G/C, G/C/G, in which C represents one or more layers of preimpregnate (6), each having an area at least equal to that of the central part (3) of the component, and G represents a layer of expanded graphite (7a) of a density of between 0.03 and 0.06.

7. Process according to any one of claims 1 to 6, wherein a press is used for compressing the stack (8), comprising annular means (9a and 10a) making it possible to block the periphery of the stack (8), means (9c and 10c) making it possible to cut the stack (8) to the dimensions of the component (1) to be obtained, and means (9b and 10b) making it possible to carry out the compression and possible deformation of the component.

8. Composite all-carbon self-assembly component obtained according to any one of claims 1 to 7, characterised in that it has the edge (2) surrounding the central part (3) of a thickness at least equal to that of the central part, and in that the expanded graphite has a density of between 0.3 and 0.6 for the edge and between 1 and 1.5 for the central part.

9. Composite component according to claim 8, wherein the stack corresponding to the edge (2) comprises at least one outer face of expanded graphite.

10. Composite component according to either one of claims 8 and 9, wherein the central part has a high deformation level with a ratio d/e greater than 1.5 locally.

11. Use of the composite components obtained according to any one of claims 8 to 10 as heat-exchanger plates and as separating plates in filtration modules.

## Patentansprüche

1. Verfahren zur Herstellung von Teilen (1) aus Kohleverbundwerkstoff mit großer Oberfläche im Verhältnis zur Dicke, die einen Rand (2) und einen zentralen Bereich (3) aufweisen, die wenigstens eine Schicht aus Kohlenstoff/Kohlenstoff-Verbundwerkstoff (4) und wenigstens eine Schicht aus rekomprimiertem Schaumgraphit (5) umfassen, welches Verfahren das Stapeln und Komprimieren wenigstens einer Prepregschicht (6) auf Grundlage von mit verkokbarem Harz imprägnierten Kohlenstoffasern und wenigstens einer Schicht aus Schaumgraphit (7a) umfaßt, gefolgt von einem Erhitzen und einer Wärmebehandlung bei hoher Temperatur,
**dadurch gekennzeichnet**, **daß**
zur Herstellung eines dichten Teils aus Kohleverbundwerkstoff mit einem stark verformten zentralen Bereich (3) und einem den Selbsthalt des Teils ermöglichenden Rand (2), wobei der Ausdruck "stark verformt" bedeutet, daß ein Abschnitt des zentralen Bereichs (3) von der Mittelebene (11) entfernt ist, die mit der Ebene des Randes (2) oder dessen Mittelebene bei nicht ebenem Rand zusammenfallen kann aber nicht muß oder daß der zentrale Bereich stark gekrümmte Abschnitte aufweist,
a) ein Stapel (8) aus wenigstens einer Prepregschicht (6), die eine eventuell verformbare Lage auf der Grundlage von Kohlenstoffaser oder Kohlenstoffaservorläufer mit einer Oberfläche wenigstens gleich der des zentralen Bereiche und wenigstens einer Schicht aus Schaumgraphit (7a) mit einer Dichte von zwischen 0,03 und 0,06 und einer Oberfläche wenigstens gleich der Oberfläche der Projektion des Teile auf die Mittelebene (11) vorbereitet wird,
b) der Stapel (8) zwischen einem Stempel (9) und einer Matrix (10) einer Presse unter einom Druck von zwischen 2,5 und 15 MPa bei einer Temperatur von zwischen 50 und 200 °C komprimiert wird, derart, daß der zentrale Bereich (3) stärker komprimiert wird als der Rand (2), aufgrund eines geringeren Abstands zwischen Stempel und Matrix im zentralen Bereich als am Rand und eventuell aufgrund einer größeren Dicke des Stapels im zentralen Bereich als am Rand, so daß eine Dichte des Schaumgraphits von zwischen 0,3 und 0,6 am Rand und zwischen 1 und 1,5 im zentralen Bereich erreicht wird;
c) das komprimierte Teil bei einer Temperatur von zwischen 400 und 3000 °C wärmebehandelt wird.

2. Verfahren nach Anspruch 1,
dadurch gekennzeichnet, daß
wenigstens eine Prepregschicht (6) sich nur über den Bereich erstreckt, der dem zentralen Bereich (3) des Teils entspricht.

3. Verfahren nach einem der Ansprüche 1 und 2,
dadurch gekennzeichnet, daß
zur Herstellung eines Teils mit stark verformtem zentralem Bereich ein Prepreg (6) verwendet wird, der aus verformbarem Substrat auf Basis von Kohlengtoffasern oder Kohlenstoffaservorläufern erhalten wird, das aus kurzfaserigen Geweben, Filzen und Vliesen ausgewählt wird.

4. Verfahren nach einem der Ansprüche 1 bis 2,
dadurch gekennzeichnet, daß
zur Herstellung eines Teils mit wenig verformtem zentralem Bereich ein Prepreg (6) verwendet wird, der aus einem verformbaren oder nichtverformbaren Substrat auf der Basis von Kohlenstoffasern oder Kohlenstoffaservorläufern, wie etwa einem dreidimensionalem Substrat, erhalten wird.

5. Verfahren nach einem der Ansprüche 1 bis 4,
dadurch gekennzeichnet, daß
der Prepreg (6) aus einem kohlenstoffhaltigen Substrat mit einem Flächengewicht von zwischen 100 und 500 g/m² erhalten wird.

6. Verfahren nach einem der Ansprüche 1 bis 5,
dadurch gekennzeichnet, daß
der Stapel (8) ausgewählt wird unter C/G-, C/G/C-, G/C/G-Stapeln, wobei C eine oder mehrere Prepregschichten (6) bezeichnet, die jeweils eine Oberfläche wenigstens gleich der des zentralen Bereichs (3) des Teils haben und G eine Schaumgraphitschicht (7a) mit einer Dichte von zwischen 0,03 und 0,06 bezeichnet.

7. Verfahren nach einem der Ansprüche 1 bis 6,
dadurch gekennzeichnet, daß
eine Presse zum Komprimieren des Stapels (8) verwendet wird, die ringförmige Einrichtungen (9a und 10a) zum Blockieren des Umfangs des Stapels (8), Einrichtungen (9c und 10c) zum Zuschneiden des Stapels (8) in den Maßen des zu erhaltenden Teils (1) und Einrichtungen (9b und 10b) zur Kompression und eventuellen Verformung des Teils aufweist.

8. Selbsthaltendes, ganz aus Kohlenstoffverbundwerkstoff bestehendes Teil, das nach einem der Verfahren 1 bis 7 erhalten ist,
dadurch gekennzeichnet, daß
es einen den zentralen Bereich (3) umgebenden Rand (2) mit einer Dicke bat, die wenigstens gleich der des zentralen Bereichs ist, und daß der Schaumgraphit am Rand eine Dichte von zwischen 0,3 und 0,6 und im zentralen Bereich von zwischen 1 und 1,5 hat.

9. Verbundwerkstoffteil nach Anspruch 8,
dadurch gekennzeichnet, daß
der dem Rand (2) entsprechende Stapel wenigstens eine Außenseite aus Schaumgraphit aufweist.

10. Verbundwerkstofftiel nach einem der Ansprüche 8 und 9,
dadurch gekennzeichnet, daß
der zentrale Bereich stark verformt ist, mit einem lokalen Verhältnis d/e von über 1,5.

11. Verwendung der Verbundverkstoffteile nach einem der Ansprüche 8 bis 10 als Wärmetauscherplatten und als Trennplatten in Filtermodulen.
